Europäisches Patentamt

European Patent Office

Office européen des brevets

(19)

(11) Veröffentlichungsnummer : **0 126 219**
**B1**

(12) # EUROPÄISCHE PATENTSCHRIFT

(45) Veröffentlichungstag der Patentschrift :
**10.02.88**

(21) Anmeldenummer : **84101971.4**

(22) Anmeldetag : **24.02.84**

(51) Int. Cl.⁴ : **G 01 V 5/04**, G 01 V 5/12,
G 01 V 5/14

(54) **Sonde zur Einführung in Bohrlöcher zum Zwecke der Erkundung von Erzlagerstätten.**

(30) Priorität : **11.04.83 DE 3312884**

(43) Veröffentlichungstag der Anmeldung :
**28.11.84 Patentblatt 84/48**

(45) Bekanntmachung des Hinweises auf die Patenterteilung : **10.02.88 Patentblatt 88/06**

(84) Benannte Vertragsstaaten :
**AT BE CH FR GB IT LI NL SE**

(56) Entgegenhaltungen :
**DE-A- 2 347 037**
**GB-A- 1 259 220**
**US-A- 2 578 722**
**US-A- 2 830 187**
**US-A- 3 404 275**

(73) Patentinhaber : **PREUSSAG Aktiengesellschaft Metall**
**Rammelsberger Strasse 2**
**D-3380 Goslar 1 (DE)**

(72) Erfinder : **Janssen, Klaus**
**Kaisertorstrasse 3**
**D-3380 Goslar (DE)**
Erfinder : **Winnacker, Helmut**
**Rosengasse 2A**
**D-3167 Ehlershausen (DE)**
Erfinder : **Johnen, Klaus**
**Im Reiherhorst 6**
**D-3007 Gehrden 1 (DE)**

(74) Vertreter : **Leine, Sigurd, Dipl.-Ing. et al**
**LEINE & KÖNIG Patentanwälte Burckhardtstrasse 1**
**D-3000 Hannover 1 (DE)**

EP 0 126 219 B1

## Beschreibung

Die Erfindung betrifft eine Sonde der im Oberbegriff des Patentanspruchs 1 genannten Art.

Sonden der betreffenden Art sind bekannt. Sie dienen zur Erkundung von Erzlagerstätten unter Ausnutzung von Fluoreszenzen, die mittels der in der Sonde angeordneten radioaktiven Strahlungsquelle angeregt werden. Durch Auswertung der Fluoreszenzstrahlung läßt sich die Art und Beschaffenheit einer Lagerstätte feststellen. Insbesondere läßt sich feststellen, ob es sich in der Lagerstätte um Schwer- oder Buntmetallerze handelt.

Zur Feststellung der Fluoreszenzstrahlung war es bekannt, in der Sonde ein Halbleiterkristall anzuordnen, das jedoch eine umfangreiche Kühlanordnung erfordert. Die Abstrahlung der radioaktiven Strahlung erfolgte bei den bekannten Sonden über einen großen Sektor, und auch der Empfang der Fluoreszenzstrahlung erfolgte über einen ausgedehnten Bereich, so daß eine Feinanalyse des Aufbau der Lagerstätte nicht möglich war.

Zur Feinuntersuchung des vertikalen Aufbaus war es daher bekannt, Kernbohrungen geringen Durchmessers auszuführen. Diese sind jedoch zeitraubend und kostspielig. Außerdem können Kernverluste auftreten, so daß die Vorteile im wesentlichen verlorengehen.

Durch die FR-PS 1 387 139 ist eine Sonde der betreffenden Art bekannt, bei der eine Blende den Detektor für die Strahlung vor Einfall der Strahlung unmittelbar von der radioaktiven Bestrahlungsquelle schützt, jedoch sind der Strahlungswinkel der radioaktiven Strahlungsquelle sowie der Einfallswinkel auf den Detektor so groß, daß die vertikale Auflösung sehr gering ist, so daß auch die Erkenntnisse über die Lagerstätte begrenzt sind.

Durch die GB-PS 1 259 220 ist eine Sonde zur Einführung in ein Bohrloch bekannt, die einen zylindrischen Abschirmungskörper aus Blei aufweist, in dem sich schräge, Kollimatoren bildende Kanäle befinden, die benachbart an der Oberfläche des Körpers aus Blei enden, wobei sich entfernt von den Enden in dem einen Loch eine Radioisotopenquelle und in dem anderen Loch ein Strahlungsdetektor befinden. Der von der Strahlungsquelle austretende Strahl ist eng begrenzt und trifft darüber hinaus auch noch schräg auf die Bohrlochwandung, während gleichzeitig der Strahlungsdetektor schräg auf die bestrahlte Fläche blickt. Die durch die Strahlung angeregte Fluoreszenz ist daher auf einen äußerst geringen Bereich des Bohrungsumfanges begrenzt, und entsprechend klein ist die Fluoreszenzausbeute und damit das von dem Strahlungsdetektor abgegebene elektrische Signal. Wegen der schrägen Bestrahlung der Bohrlochwandung ist außerdem die Auflösung in Bohrlochrichtung gering.

Durch die DE-OS 23 47 037 ist eine Bohrlochsonde bekannt, bei der eine Strahlungsquelle zwar über den gesamten Umfangsbereich der Sonde, jedoch in Axialrichtung über einen Sektor von 90° und mehr strahlt. Dadurch ergibt sich eine Bestrahlung einer Bohrlochwandung über eine verhältnismäßig lange Strecke in Bohrlochrichtung, so daß die Auflösung gering ist. Wegen der Aufspreizung der Strahlung auf einen großen Sektor ist außerdem deren Intensität vergleichsweise gering, insbesondere die spezifische Strahlungsdichte auf die zu untersuchende Bohrlochwandung. Zwischen der Strahlungsquelle und einem axial entfernt davon angeordneten Strahlungsdetektor ist eine Abschirmung in Form eines doppelkegelstumpfförmigen Körpers angeordnet, der die direkte Bestrahlung des Detektors durch die Strahlungsquelle verhindern soll, im übrigen den Strahlungssektor in Axialrichtung praktisch nicht begrenzt.

Durch die US-A-2 830 187 ist eine Bohrlochsonde mit einem Strahlungsdetektor bekannt, mit dem Strahlung aus dem Umgebungsbereich der Sonde aufgrund natürlicher oder induzierter Radioaktivität festgestellt werden soll. Zur Feststellung dienen mehrere, in verschiedene Radialrichtungen weisende Kristalle in Verbindung mit Fotovervielfachern, wobei die Kristalle in Bohrlochrichtung Strahlung nach oben über einen Winkel von 90° und nach unten über einen Winkel von ca. 70°, also insgesamt über einen vertikalen Öffnungswinkel von 160° auffangen. Es handelt sich nicht um einen Detektor zur Aufnahme von Fluoreszenz, und insbesondere ist wegen des großen vertikalen Öffnungswinkels die vertikale Auflösung äußerst gering. Zur Induzierung von radioaktiver Strahlung ist in der Sonde außerdem eine Neutronenquelle in zentraler Lage unterhalb der Strahlungsdetektoren vorgesehen und gegenüber diesen durch eine Blende getrennt, die eine untere Kegelfläche aufweist, deren Spitze etwa in der Strahlungsquelle liegt. Die Kegelform hat dabei den Zweck, die Strahlung der Neutronenquelle möglichst weit nach oben durchzulassen, so daß in Verbindung mit der völlig freien Strahlung nach unten hin die Bohrlochumgebung in einem sehr großen Vertikalwinkel von ebenfalls ca. 160° bestrahlt wird. Auch hierdurch ist die vertikale Auflösung bei der nachfolgenden Strahlungsabtastung nicht gegeben.

Der Erfindung liegt die Aufgabe zugrunde, eine Sonde der betreffenden Art zu schaffen, mit der einfach, billig und schnell von kleinkalibrigen Untersuchungsbohrlöchern aus der Aufbau von Lagerstätten, insbesondere Erzlagerstätten, mit kleinem Durchtrittsbereich der Strahlung für Senden und Empfangen und damit mit hoher Auflösung in Bohrlochrichtung abgetastet und analysiert werden kann, bei der gleichzeitig die Empfindlichkeit hoch ist.

Die Erfindung ist im Patentanspruch 1 gekennzeichnet. Aufgrund der erfindungsgemäßen Ausbildung der Blende erfolgt praktisch eine scheibenförmige Bestrahlung der Bohrlochwandung, so daß auf dieser nur ein schmaler Ring bestrahlt und zur Fluoreszenz angeregt wird. Damit wird auch Fluoreszenzstrahlung nur von dieser schmalen Ringfläche von der Empfangsfläche des Detektors aufgefangen, so daß Strahlung aus anderen Gebieten das Untersuchungsergebnis nicht beeinträchtigt. Somit ergibt sich insgesamt eine größere Auflösung, die bessere Erkenntnisse über die Lagerstätte ermöglicht. Durch die eng benachbarten Blendenflächen tritt außerdem in vorteilhafter Weise eine Energieerhöhung durch Reflexionen an den Blendenwänden auf.

Nach der besonders zweckmäßigen Weiterbildung nach Anspruch 2 steht die Empfangsfläche des Detektors im wesentlichen senkrecht zur Achse der Sonde. Sie kann auch leicht geneigt, z. B. auch kegelförmig sein.

Durch die Weiterbildung der Erfindung gemäß Anspruch 3 wird der Strahlengang für die Fluoreszenzstrahlung verbessert, so daß in vorteilhafter Weise der Detektor axial näher mit seiner senkrecht zur Achse der Sonde stehenden Empfangsfläche heranrücken kann, dadurch die Intensität der aufgefangenen Strahlung erhöht und außerdem das Einfallen von Strahlung aus anderen als den gewünschten Richtungen unterdrückt wird.

Aufgrund der scheibenförmigen radioaktiven Strahlung ist der Durchtrittsbereich der Strahlung durch die Wandung des Gehäuses ebenfalls schmal, so daß auch der den Durchtritt der Strahlung durch die Wandung ermöglichende Materialbereich der Wandung entsprechend klein bemessen werden kann. Das Gleiche gilt für den Bereich der von der Fluoreszenquelle auf die Empfangsfläche des Detektors fallenden Strahlung.

Die Kegelfläche, in der die Außenfläche der Blende liegt bzw. die Verlängerung über die Spitze des Kegels hinaus, schneidet zweckmäßigerweise die Empfangsfläche, läuft also nicht außerhalb davon vorbei, so daß auch kein Anteil der fluoreszierenden Strahlung auf die jeweils gegenüberliegende Bohrlochwandung treffen und dort in unerwünschter Weise weitere Fluoreszenz anregen kann.

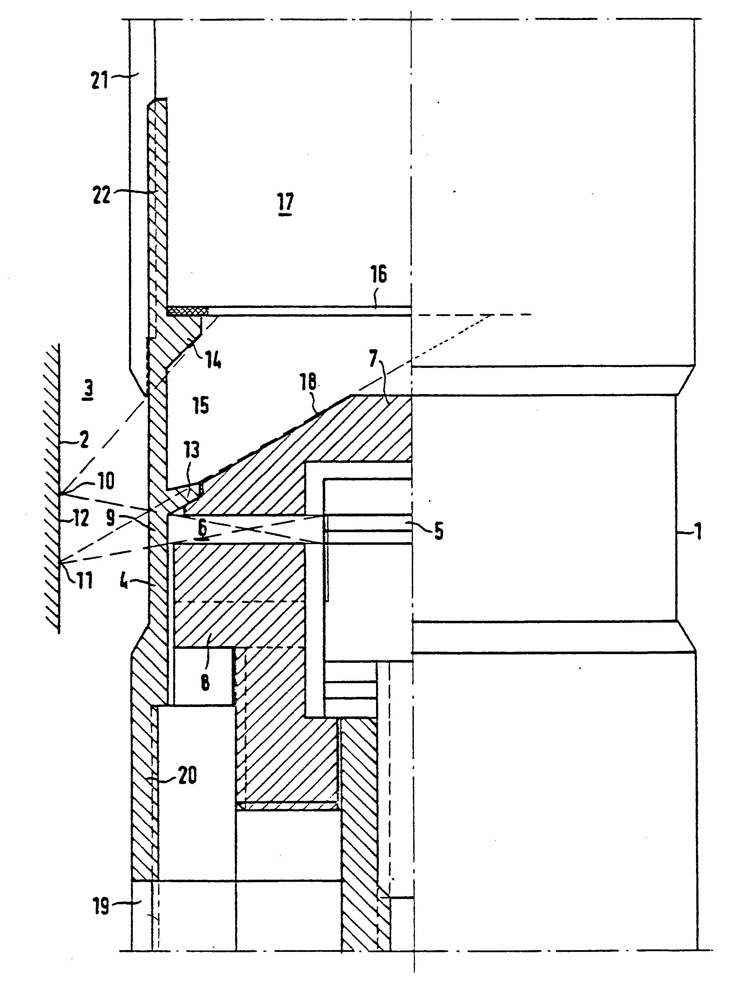

Anhand der Zeichnung soll die Erfindung an einem Ausführungsbeispiel näher erläutert werden.

Die Zeichnung zeigt ein Ausführungsbeispiel einer Sonde 1 gemäß der Erfindung, teilweise axial abgeschnitten und teilweise axial geschnitten, wobei im geschnittenen Bereich eine Wandung 2 eines Bohrloches 3 angedeutet ist. Die Sonde weist ein Gehäuse 4 auf, in dessen Innenraum sich koaxial zu dem Gehäuse eine radioaktive Strahlungsquelle 5 befindet, deren Strahlung durch einen Schlitz 6 nach außen tritt, der zwischen zwei Blendenteilen 7 und 8 gebildet ist. Die durch den Schlitz 6 begrenzte Strahlung tritt durch einen Wandungsteil 9 des Gehäuses 4 in das Bohrloch 3 ein und bestrahlt einen zwischen zwei Punkten 10 und 11 liegenden, die Form eines Ringes 12 aufweisenden Wandungsbereich der Wandung 2 des Bohrloches 3. Dieser Bereich der Bohrlochwandung wird zur Fluoreszenz angeregt, je nach den in diesem Bereich befindlichen Erzen, und diese Fluoreszenzstrahlung gelangt durch einen zwischen zwei nach innen gerichteten Ansätzen 13 und 14 liegenden Wandungsteil 15 aus dämpfungsarmem Material, insbesondere Beryllium, auf eine Empfangsfläche 16 eines Detektors 17, der ein Szintillationsdetektor oder Halbleiterdetektor sein kann und das Fluoreszenzsignal in ein davon abhängiges elektrisches Nutzsignal umwandelt.

Das Blendenteil 7 weist eine der Empfangsfläche 16 des Detektors 17 zugewandte Außenfläche 18 auf, die kegelig und zu der Sonde koaxial ist und deren Verlängerung nach außen ungefähr auf den Punkt 11 trifft, das ist die der Empfangsfläche 16 axial abgewandte ungefähre Begrenzung des bestrahlten Ringes 12 der Wandung 2 des Bohrloches 3. Durch die Kegelform kann die Fluoreszenzstrahlung aus dem Bereich des Ringes 12 im wesentlichen unbeeinträchtigt die gesamte Empfangsfläche 16 des Detektors 17 erreichen. Der Verlauf der Strahlung der Strahlungsquelle 5 und der Fluoreszenzstrahlung von dem Ring 12 ist durch dünne gestrichelte Linien angedeutet.

Das Gehäuse 4 ist unten durch ein nur angedeutetes Gehäuseteil 19 geschlossen, das in ein Innengewinde 20 eingeschraubt ist. In gleicher Weise ist das Gehäuse oben durch ein Gehäuseteil 21 geschlossen, das auf ein Außengewinde 22 aufgeschraubt ist.

Von der Sonde 1 aus erstreckt sich ein Koaxialkabel zu einer Vorschubeinrichtung, mit deren Hilfe die Sonde 1 in dem Bohrloch 3 genau bestimmbar bewegbar ist. Über das Koaxialkabel erfolgt die Stromversorgung und Übertragung des Nutzsignals von dem Detektor 17 zu einer außerhalb des Bohrloches angeordneten, nicht dargestellten Auswerteschaltung.

## Patentansprüche

1. Sonde (1) zur Einführung in ein Bohrloch (3) zum Zwecke der Erkundung von Erzlagerstätten, mit einem zylindrischen Gehäuse (4), in dem konzentrisch eine radioaktive Strahlungsquelle (5) und ein gegenüber der Strahlungsquelle durch eine Blende (7, 8) abgeschirmter Detektor (17) zur Feststellung von durch die radioaktive Strahlung in der Bohrlochumgebung angeregter Fluoreszenzstrahlung angeordnet sind, dadurch gekennzeichnet, daß die Blende (7, 8) zur Bildung eines bestrahlten Ringes (12) an der Wandung (2) des Bohrlochs (3) einen zur Achse der Sonde (1) senkrecht verlaufenden, sich bis an die Innenwandung des Gehäuses (4) erstreckenden Schlitz (6) bildet, der durch scheibenförmige, in ihrem gegenseitigen Abstand einstellbare Flächen begrenzt ist.

2. Sonde nach Anspruch 1, dadurch gekennzeichnet, daß der Detektor (17) eine zur Achse der Sonde (1) senkrecht stehende, der Strahlungsquelle (5) zugewandte Empfangsfläche (16) aufweist.

3. Sonde nach Anspruch 2, dadurch gekennzeichnet, daß die der Empfangsfläche (16) zugewandte Außenfläche (18) der Blende (7, 8) in einer zu der Sonde (1) koaxialen Kegelfläche liegt, die die der Empfangsfläche (16) abgewandte Begrenzung (11) des durch den Schlitz (6) der Blende (7, 8) bestimmten bestrahlten Ringes (12) der Wandung des Bohrlochs (3) schneidet.

4. Sonde nach Anspruch 1, dadurch gekennzeichnet, daß der Wandungsteil (9) des Gehäuses (4) im Bereich der Verlängerung des Schlitzes (6) der Blende (7, 8) und im Bereich der Projektion des bestrahlten Ringes (12) der Wandung (2) des Bohrloches (3) auf die Empfangsfläche (16) aus einem für die Strahlung dämpfungsarmen Material, vorzugsweise Beryllium, besteht.

5. Sonde nach Anspruch 2, dadurch gekennzeichnet, daß die Kegelfläche, in der die Außenfläche (18) der Blende (7, 8) liegt, bzw. die Verlängerung der Kegelfläche über die Spitze des Kegels hinaus die Empfangsfläche (16) schneidet.

## Claims

1. Probe (1) for being introduced into a borehole (3) for the exploration of ore deposits, comprising a cylindrical housing (4), in which are concentrically arranged a radioactive radiation source (5) and a detector (17) shielded with respect to the radiation source by a screen (7, 8) for the detection of fluorescence radiation induced by the radioactive radiation in the vicinity of the borehole, characterised in that the screen (7, 8) for forming an irradiated ring (12) on the wall (2) of the borehole (3) forms a slot (6) disposed perpendicularly of the axis of the probe (1) and extending as far as the inside wall of the housing (4), which slot is defined by disc-like surfaces adjusted in their mutual spacing.

2. Probe according to claim 1, characterised in that the detector (17) comprises a receiving surface (16) disposed vertically of the axis of the probe (1) and facing the radiation source (5).

3. Probe according to claim 2, characterised in that that external surface (18) of the screen (7, 8) which is facing the receiving surface (16) lies in a conical surface which is coaxially of the probe (1), which surface intersects the boundary (11), remote from the receiving surface (16), of that irradiated ring (12) of the wall of the borehole (3) which is determined by the slot (6) of the screen (7, 8).

4. Probe according to claim 1, characterised in that that part (9) of the wall of the housing (4) in the region of the extension of the slot (6) of the screen (7, 8) and in the region of the projection of the irradiated ring (12) of the wall (2) of the borehole (3) on to the reception surface (16) consists of a material, advantageously beryllium, which has a low damping effect as regards the radiation.

5. Probe according to claim 2, characterised in that the conical surface in which is situated the external surface (18) of the screen (7, 8) or respectively the extension of the conical surface beyond the apex of the cone intersects the reception surface (16).

## Revendications

1. Sonde (1) pour une introduction dans un trou de forage (3) en vue de la détection de gisements de minerais, comportant un carter cylindrique (4), dans lequel sont disposés une source de rayonnement radioactif (5) et un détecteur (17) protégé par rapport à la source de rayonnement par un diaphragme (7, 8) en vue d'un captage d'un rayonnement fluorescent excité par le rayonnement radioactif dans l'environnement du trou de forage, caractérisée en ce que le diaphragme (7, 8) forme, en vue de la création d'un anneau irradié (12) sur la paroi (2) du trou de forage (3), une fente (6) orientée perpendiculairement à l'axe de la sonde (1), s'étendant jusqu'à la paroi intérieure du carter (4) et qui est délimitée par des surfaces en forme de disques dont l'espacement mutuel est réglable.

2. Sonde selon la revendication 1, caractérisée en ce que le détecteur (17) comporte une surface réceptrice (16) orientée perpendiculairement à l'axe de la sonde (1) et dirigée vers la source de rayonnement (5).

3. Sonde selon la revendication 2, caractérisée en ce que la surface extérieure (18), dirigée vers la surface réceptrice (16) du diaphragme (7, 8) est placée sur une surface conique coaxiale à la sonde (1) et qui coupe la lisière (11), opposée à la surface réceptrice (16), de l'anneau (12) de la paroi du trou de forage (3) qui est irradié de façon déterminée par la fente (6) du diaphragme (7, 8).

4. Sonde selon la revendication 1, caractérisée en ce que la partie de paroi (9) du carter (4) située dans une zone du prolongement de la fente (6) du diaphragme (7, 8) et dans une zone de la projection de l'anneau irradié (12) de la paroi du trou de forage (3) sur la surface réceptrice (16), est formée d'un matériau à peu d'effet d'amortissement pour le rayonnement, de préférence du béryllium.

5. Sonde selon la revendication 2, caractérisée en ce que la surface conique, sur laquelle est placée la surface extérieure (18) du diaphragme (7, 8), ou bien le prolongement de la surface conique au-dessus du sommet du cône, coupe la surface réceptrice (16).